# EUROPEAN PATENT SPECIFICATION

(11) **EP 3 473 326 B1**
(45) Date of publication and mention of the grant of the patent: **29.07.2020**
(21) Application number: 18196771.2
(22) Date of filing: 26.09.2018
(51) Int. Cl.: B01D 61/18, B01D 61/20, B01D 63/06, B01D 65/08, B01D 65/02

(54) **TANGENTIAL FILTRATION DEVICE**
TANGENTIALFILTRATIONSAPPARAT
APPARATUS À FILTRATION TANGENTIELLE

(30) Priority: 27.09.2017 IT 201700108416
(43) Date of publication of application: 24.04.2019
(73) Proprietor: TMCI Padovan S.p.A., 31029 Vittorio Veneto (IT)
(72) Inventor: BORNIA, Luca, 31029 VITTORIO VENETO (IT)
(74) Representative: Piovesana, Paolo

(56) References cited:
- EP-A2- 2 058 046
- WO-A1-2011/157835
- FR-A1- 2 909 008
- US-A- 4 775 471

## Description

The present invention relates to an improved tangential filtration device, particularly for liquid food.

Filtration devices are known comprising a filtering chamber which contains a plurality of filtering elements therein and is connected, on one side, to a tank for feeding the product to be filtered and, on the other side, to a tank for collecting the filtered liquid.

The filtering elements housed in the filtering chamber carry out the separation of the liquid fraction of the product from the solid one and are connected to two outlets: a first outlet for the filtered liquid, or "permeate", which is sent to a collection tank, and a second outlet for the product not completely filtered, or "concentrate" or "retentate", still containing a solid fraction in suspension.

Among the known filtering elements used in the food industry, in particular, in liquid processing plants (wines, musts, juices, etc.) to separate the solid particles from the liquid matrix, there are those which employ the operating principle of tangential filtration. In particular, this type of filtration involves passing the liquid to be filtered parallel to one or more permeable membranes, and creating a pressure difference between the two environments separated thereby, so that a part of the liquid matrix may pass through the membranes themselves, which, instead, retain the solid particles.

In essence, with this type of filtration, the liquid to be filtered circulates/flows tangentially to the permeable membrane or membranes, and the filtration is obtained by virtue of the pressure difference existing between the inside and the outside of the membrane wall. More in detail, the liquid to be processed laps a membrane which retains the particles exceeding a certain size and allows the liquid components, as well as the smaller particles, to pass under the effect of the pressure supplied by the liquid to be processed itself.

This filtration method is particularly advantageous since the tangential flow of the liquid circulating during the filtration procedure allows to continuously clean the inner surface of the membrane.

More in detail, in such context, tangential filters are already known consisting of a cylindrical cladding, inside which a bundle of tubular membranes of porous material is housed, constrained by the ends thereof which are open by perforated partitions, in turn fastened, by the edge thereof, to the inner wall of the cylindrical cladding. Furthermore, the latter is closed at the ends by two heads, which delimit two head chambers with two partitions, and more precisely an upper chamber for the inlet of the liquid to be filtered and a lower chamber for the outlet of the liquid which has longitudinally passed through the tubular membranes and, therefore, did not undergo the filtration process.

As said, since the liquid which longitudinally and internally runs through the tubular membranes has a pressure higher than the pressure existing outside the membranes themselves, the partial filtration occurs as it passes from the inside to the outside thereof, with the solid particles depositing on the inner wall thereof.

Furthermore, suitably, the cylindrical cladding of the tangential filter is provided with an attachment for an exhaust duct, from which the filtered liquid (or "permeate") emerges, while the liquid not completely filtered (or "concentrate" or "retentate"), which still contains a solid fraction in suspension and which has longitudinally and entirely passed through the tubular membranes, is exited through the lower head of the filter to be then re-introduced into the circulation.

A drawback of such known solutions concerns the fact that the solid residues present in the product to be filtered (and in particular fibrous waste, such as cellulosic materials) stop and are deposited over time on and at the upper inlet opening of the tubular membranes, thus preventing an effective tangential filtration.

Hence, the need to block the system and to wash it with water and other components, thus causing an undesired waste of time.

FR2909008 describes a tangential filtration device comprising a cylindrical cladding formed by a plurality of tubular membranes arranged vertically. The liquid to be filtered is sent and enters at the upper ends of the tubular membranes which, therefore, are crossed longitudinally from the top downwards. The device also comprises a rotating scraping element which acts at the outer edges of the upper ends of the tubular membranes to move and remove - as well as to cut - the fibrous waste which is deposited at such edges. In particular, in the device described in FR2909008, the size and the width of the part of the rotating element which comes into contact with the edges of the upper ends of the tubular membranes are smaller with respect to the diameter of said membranes and this to avoid the complete interruption of the inlet of the liquid to be filtered into the tubular membranes. Furthermore, for the removal of the residues present at the upper ends of the tubular membranes, FR2909008 also describes the use of means for generating at least one jet of a liquid which is directed tangentially to the plane in which the inlet ends of all tubular membranes lie.

It is the object of the invention to eliminate such drawbacks and to propose a filtration device which allows to simply, quickly and easily remove the solid residues which are deposited at the inlet openings of the membranes.

It is another object of the invention to provide a device which allows to avoid the frequent interruption of the operation thereof for cleaning the filtering membranes at the inlet openings thereof and which, at the same time, allows to avoid a laborious and long final cleaning thereof.

It is another object of the invention to provide a device in which the filtration is effective and complete.

It is another object of the invention to propose a device in which the cleaning at the inlet openings of the filtering membranes is carried out automatically, without any intervention by the operator.

It is another object of the invention to propose a device which is simple and inexpensive to realize.

It is another object of the invention to propose a device which has alternative and/or improving features, both in constructive and in functional terms, with respect to the conventional ones.

All of these objects, both alone and in any combination thereof, as well as others which will become apparent from the following description, are achieved, in accordance with the invention, by an improved device for tangential filtration with the features of the claim 1.

In particular, the tangential filtration device, particularly for fluid food products, comprises:
- a tangential filter arranged essentially vertically and provided with a plurality of filtering membranes having a longitudinal extension and arranged essentially vertically, said tangential filter being also provided with at least one inlet for the product to be filtered, with at least one outlet of the retentate and with at least one outlet of the permeate, said at least one inlet for the product to be filtered being provided for at the lower portion of said tangential filter so that the filtering membranes are longitudinally crossed, from the bottom upwards, by the product to be processed;
- a pump for sending the product to be filtered to a chamber communicating with the inlet of said tangential filter;
- a cleaning apparatus comprising a rotating element provided with at least one member integral in rotation with said rotating element and acting on and/or at the inlet openings of the lower ends of said filtering membranes, said rotating element being also provided with at least one nozzle communicating fluidically with said chamber and/or said inlet to send a jet of product to be filtered on and/or at the inlet openings of the lower ends of said filtering membranes; and
- at least one area for the collection of the residues which are removed from the inlet openings of the lower ends of said filtering membranes by said cleaning apparatus and/or by the jet originating from said at least one nozzle, said at least one collection area being provided for inside said chamber and/or of said tangential filter which is below with respect to said at least one member and to said nozzle.

Advantageously, the device further comprises a shredder which is arranged in the circuit segment downstream of the pump and upstream of the inlet of the tangential filter and which comprises cutting blades actuated in rotation by a motor, said cutting blades being essentially in contact with a perforated plate.

Advantageously, the rotating element comprises a body having a vertical extension which defines and/or internally comprises a pipe which is in fluid connection with said chamber and with the circuit segment downstream of the pump. Preferably, the body of said rotating element is internally hollow and has at least one through hole obtained on the side walls thereof for the fluid connection of said pipe, defined inside the rotating element, with said chamber

Advantageously, said first and/or said second member have a radial extension with respect to said body, having a vertical extension, of said rotating element.

Advantageously, said body is integral, at the bottom thereof, with a motorized actuator.

Advantageously, the device further comprises an annular partition fitted around the rotating element to divide the chamber into two overlapping areas.

The present invention is hereinafter further clarified in some of the preferred embodiments thereof, which are given purely by way of explanation and not by way of limitation with reference to the accompanying drawings, in which:

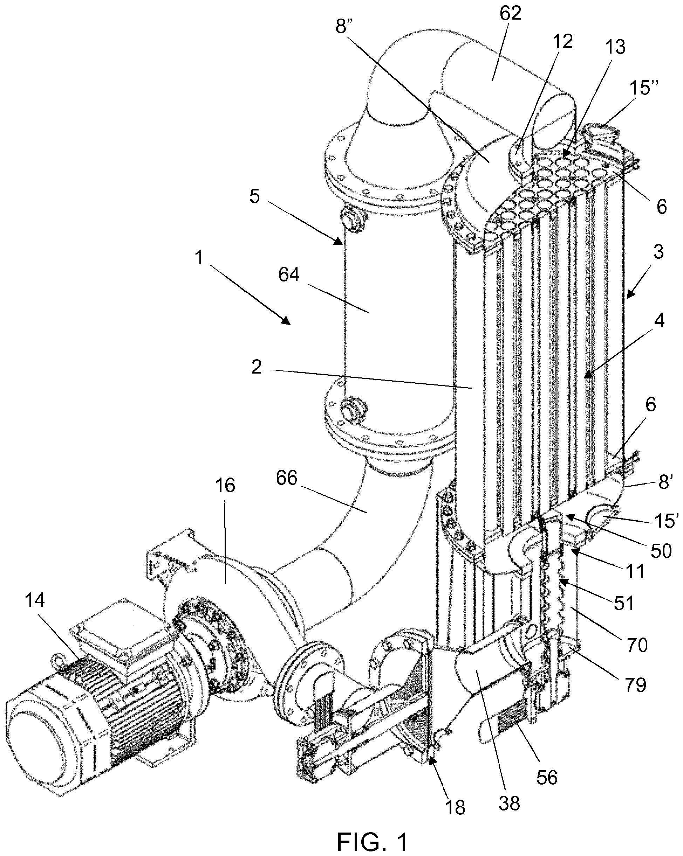

Figure 1 shows in a first partially sectioned perspective view of the device in accordance with the invention,
Figure 2 shows a detail of the lower part of the device of Figure 1,
Figure 3 shows the detail of Figure 2 in a different embodiment,
Figure 4 shows, according to a vertical section passing through the center of rotation of the rotating element, the detail of the lower part of the device of Figure 1,
Figure 5 shows an enlarged detail of Figure 4,

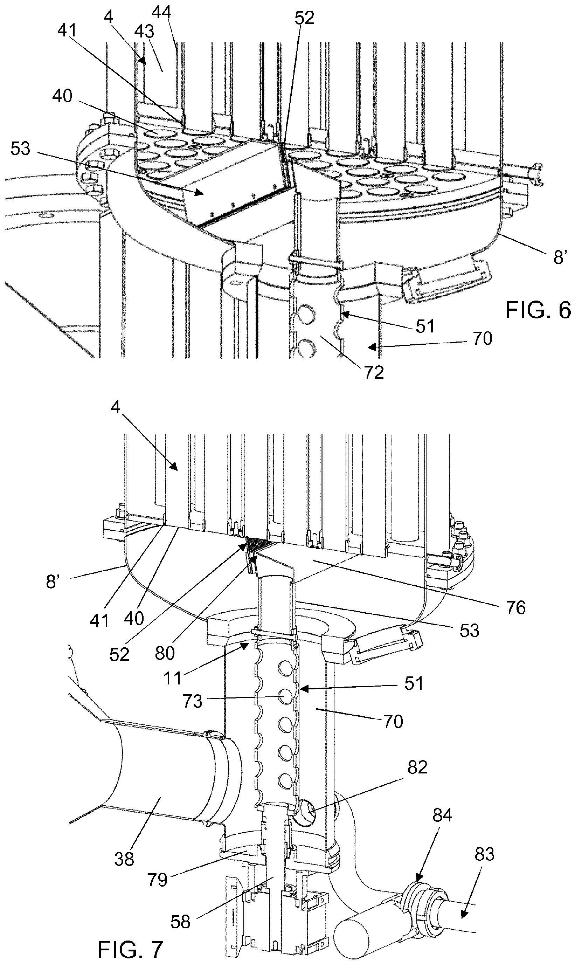

Figure 6 shows a second perspective view of the partially sectioned detail of the lower part of the device of Figure 1,
Figure 7 shows a third perspective view of the detail of the lower part of the device of Figure 1 with the brush alone,

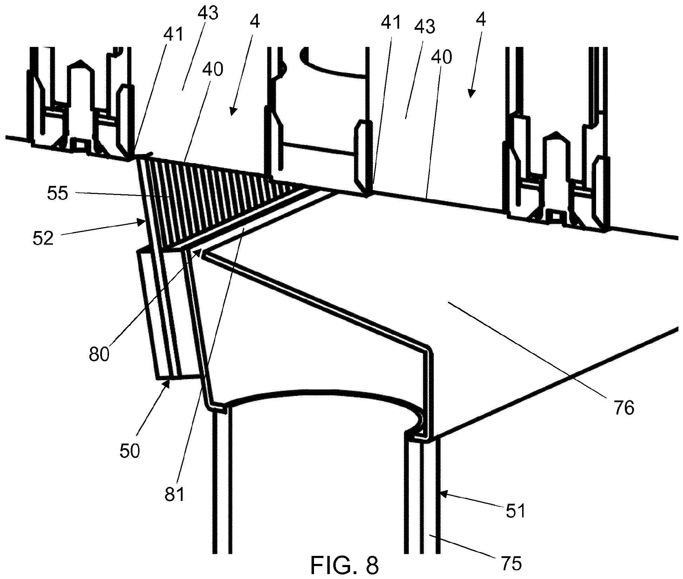

Figure 8 shows an enlarged detail of Figure 7.

As the Figures show, the filtration device in accordance with the invention, overall indicated by numeral 1, comprises a tangential filter 3 having a vertical extension and arranged essentially vertically. In particular, the filter 3 is of the conventional type and comprises a cylindrical cladding 2 with a vertical axis which is closed below by a first head 8' and above by a second head 8".

Suitably, the tangential filter 3 is provided with an inlet 11 for the product to be filtered, with an outlet 13 for the retentate and with an outlet for the permeate/filtered (not shown).

Inside the cylindrical cladding 2 a plurality of filtering membranes 4 are housed. In particular, the filtering membranes 4 of the tangential filter 3 have a longitudinal extension, preferably tubular, are arranged essentially vertically and are suitably configured for the filtration of the product (fluid and/or liquid) under pressure to be filtered. In particular, the vertical membranes 4 are suitably porous and constitute the filtering elements of the tangential filter 3.

Suitably, the filtering membranes 4 are fastened, at the ends thereof, to partitions 6 which, in turn, are fastened to the cladding 2 and to the two heads 8', 8" between flanges integral therewith. Preferably, windows, respectively 15' and 15", are provided for on the heads 8', 8", to allow the operators to observe the inside of the tangential filter 3 at the portions between the partitions and the corresponding heads.

The device 2 is configured so that the product to be filtered enters at an inlet 11 which is provided for in the lower portion of the tangential filter 3 and, after having longitudinally passed through the filtering membranes 4 of the filter itself from the bottom upwards, the resulting retentate exits the tangential filter 3 at an outlet 13 provided for in the upper part of the latter. In particular, the inlet 11 for the product to be filtered is provided for at the lower portion of the tangential filter 3 and, more in detail, is provided for at the inlet openings 40 of the lower ends 41 of the filtering membranes 4 which are thus longitudinally crossed by the product to be processed from the bottom upwards.

In particular, it is understood that "lower" means that it is lower in height and/or that, vertically, it has a smaller distance defined with respect to the base on which the device in accordance with the invention is intended to be resting. Correspondingly, it is understood that, hereinafter, "upper" means that it is higher in height and/or that, vertically, it has a greater distance defined with respect to the base on which the device in accordance with the invention is intended to be resting.

Suitably, to this end, a first opening 10 for the inlet of the product to be filtered is provided for on the lower head 8', while on the upper head 8" a second opening 12 is provided for, for the outlet of the retentate, i.e., of the product to be processed, which has longitudinally passed through the tubular membranes 4 from the bottom upwards without being subjected to filtration.

The inlet 11 of the filter 3 and the outlet 13 of the retentate are connected to each other, externally to the filter 3, by a circuit 5 which, suitably, acts as a circuit for the recirculation of the retentate. Suitably, such circuit 5 is also connected, at a junction (not shown), to a circuit for the feeding of a new product to be filtered, which is continuously introduced.

In particular, it is understood that, hereinafter, "product to be processed" circulating inside the circuit 5 and being introduced inside the filter 3 means the retentate which has already passed through the filter 3 at least once and/or the new product which has never passed through the filter 3 and which comes from a feeding circuit (not shown). In particular, inside the filter 3 the product to be processed flows and advances, from the lower inlet 11 to the upper outlet 13, parallel with respect to the longitudinal extension, preferably vertical, of the filtering membranes 4, i.e., tangentially lapping the filtering surface of the latter.

The device 2 comprises a pump 16 for sending the product to be processed towards the inlet 11 provided for in the lower portion of the tangential filter 3. Suitably, the pump 16 is inserted inside the circuit 5. Advantageously, the device 1 also comprises a motor 14 with whose shaft the pump shaft 16 is integral.

Advantageously, a first junction duct 62, connected in turn to a multi-tube cooling exchanger 64 connected to the inlet of the pump 16 by means of a second junction duct 66, branches off from the upper head 8".

Advantageously, in the circuit segment 5 downstream of the pump 16 and upstream of the inlet 11 of the tangential filter 3, a shredder 18 is provided for, preferably a shredding mill.

In particular, preferably, the shredder 18 consists of two bodies 20, 22 constrained to each other by means of flanges 24. More in detail, a radial duct 26, connected to the outlet of the pump 16 is inserted into the first body 20, and a shaft 30, actuated by a geared motor 32, extends from the bottom wall 28 of the first body 20.

Suitably, at the end of the shaft 30, three equally spaced blades 34 with a cutting blade are mounted, which extend up to the edges of the flanges 24. Preferably, the second body 22 consists of a funnel-shaped casing 36 ending with a duct 38. Preferably, a perforated plate 40 is arranged in the fastening area of the two flanges 24.

At the inlet 11 of the tangential filter 3, an apparatus, overall indicated with 50, is provided for to clean the inlet openings 40 of the filtering membranes 4, and thus to remove the solid surface layer and/or the solid residues which are deposited at said openings 40 during the filtration. The inlet openings 40 of the filtering membranes 4 are defined on and/or at the lower ends 41 of said membranes.

The cleaning apparatus 50 comprises an element 51 rotating about an axis of rotation essentially vertical and parallel to the axis of extension of the filter 3. The rotating element 51 is provided, above, with at least one member 52 or 53 acting on the inlet openings 40 of the lower ends 41 of the filtering membranes 4. Suitably, the rotating element 51 is actuated in rotation by a motorized actuator 56 which, preferably, is associated with the lower portion of said element.

In particular, the members 52 or 53 are fastened to the rotating element 51 and, therefore, rotate with the latter.

Advantageously, a first member 52 may be provided for, which is configured so as to have an edge and/or a portion 54 in contact with the inlet openings 40 of the lower ends 41 of the filtering membranes 4 so as to remove the solid residues which are deposited at and on said openings. In essence, said first member 52 essentially acts as a brush for removing solid residues from the inlet openings 40 of the filtering membranes 4.

Preferably, said first member 52 at least partly comprises a comb-shaped portion 55 in which the terminations of the teeth of the comb itself are in contact with the inlet openings 40 of the lower ends 41 of the filtering membranes 4. Preferably, said first member 52 consists of a plastic comb.

Suitably, the first member 52 - being associated and integral in rotation with the rotating element 51 - continuously laps the inlet openings 40 of the lower ends 41 of the filtering membranes 4, thus removing the solid surface layer and/or the solid residues which are deposited on said openings during filtration.

Advantageously, in addition to or in place of said first member 52, a second member 53 may be provided for, configured so that, against the movement in rotation thereof caused by the rotating element 51, it temporarily closes the inlet openings 40 of the lower ends 41 of one or more filtering membranes 4.

Preferably, the second member 53 comprises at least one blade 57, essentially plane and having a radial extension, which is essentially adherent and parallel/facing the plane in which the inlet openings 40 of the lower ends 41 of the filtering membranes 4 lie.

Preferably, the second member 53 comprises a profile section with an essentially L-shaped cross section in which a segment 58 is fastened above to the rotating element 51 while the other segment defines and constitutes said essentially plane blade 57. Preferably, said second member 52 consists of a metal or plastic profile section.

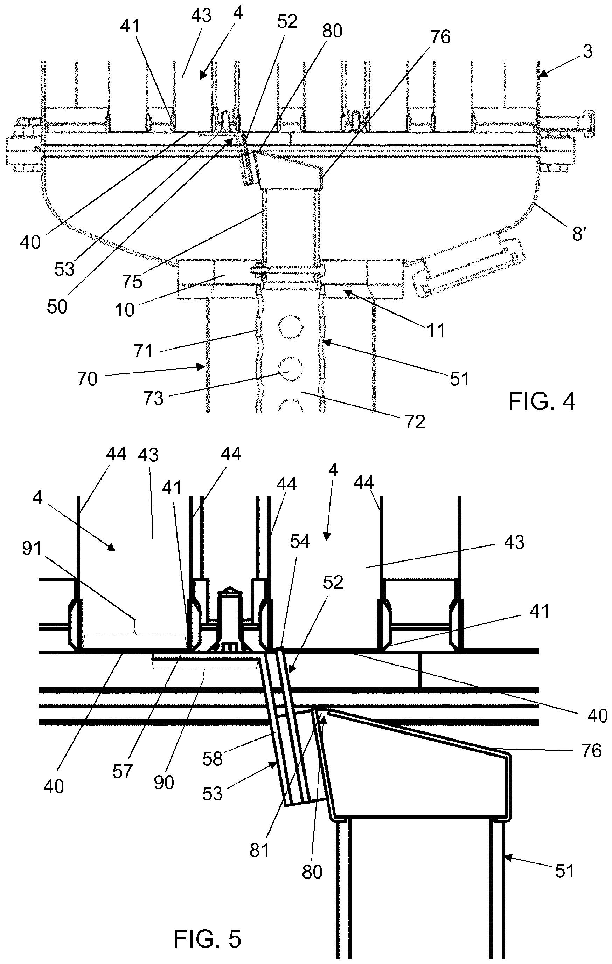

Preferably, the essentially plane blade 57 has a width 90 equal to or slightly greater than the diameter 91 of the tubular filtering membranes 4 (see Figure 5) and, in particular, is greater than the diameter 91 of the inlet openings 40 of said filtering membranes so that they may close temporarily during the rotation thereof.

More in detail, suitably, the rotation of the second member 52, which is fastened to the rotating element 51, causes the plane blade 57 to close or temporarily plug the inlet opening 40 of the lower ends 41 of the filtering membranes 4, thus preventing the product to be filtered to enter inside the channels 43 of the filtering membranes 4. In essence, thereby, the blade 57 essentially acts as an on-off valve, varying the flow of product to be filtered entering inside the channels 43 of the filtering membranes 4, and thus improving the filtration performance of the membranes. More in detail, when - following the rotation of the rotating element 51 - the blade 57 is facing one or more inlet openings 40 of filtering membranes 4, aligned radially with respect to the axis of rotation of the rotating element 51, the blade 57 itself closes/plugs the channels 43 of such membranes below and, therefore, the liquid present inside the channels thereof stops; when, immediately afterwards, the blade 57 changes the angular position thereof - following the further rotation of the rotating element 51 - the blade itself will no longer be facing the inlet openings 40 of the previously plugged/closed filtering membranes 4 and therefore, the channels 43 of the latter will be invested by a flow of product to be filtered at high speed. In essence, the alternation of high and low flow speed of the product to be filtered, which enters and passes through the channels 43 of the membranes 4, cleans the inner surfaces 44 of the channels themselves, thus improving the performance of the membrane both in terms of filtration flow rate and in terms of filtration cycle length.

Advantageously, the rotating element 51 is housed at least partly inside a chamber 70, having an essentially vertical extension, connected to the inlet 11 of the tangential filter 3.

Preferably, the rotating element 51 is partly housed in said chamber 70 and partly in said portion of the tangential filter 3 comprised between the lower ends of the filtering membranes 4 and the lower head 8'.

Advantageously, the rotating element 51 comprises a body 71, preferably cylindrical, having a vertical extension, which defines or internally comprises a pipe 72 which is in fluid connection with the circuit segment 5 downstream of the pump 16 and/or of the shredder 18. Suitably, the bottom of the body 71 is integral with the shaft 58 associated with the motorized actuator 56. In particular, the duct 38 of the recirculation circuit 5 leads inside said chamber 70 in which the rotating element 51 is housed.

Suitably, the body 71 has at least one hole 73, preferably a plurality of through holes 73, obtained on the side walls of said body, which define the fluid connection of the duct 38 of the circuit 5 to the pipe 72 defined inside the rotating element 51.

Suitably, the first member 52 and/or the second member 53 have a radial extension with respect to said body 71, having a vertical extension, of said rotating element 51.

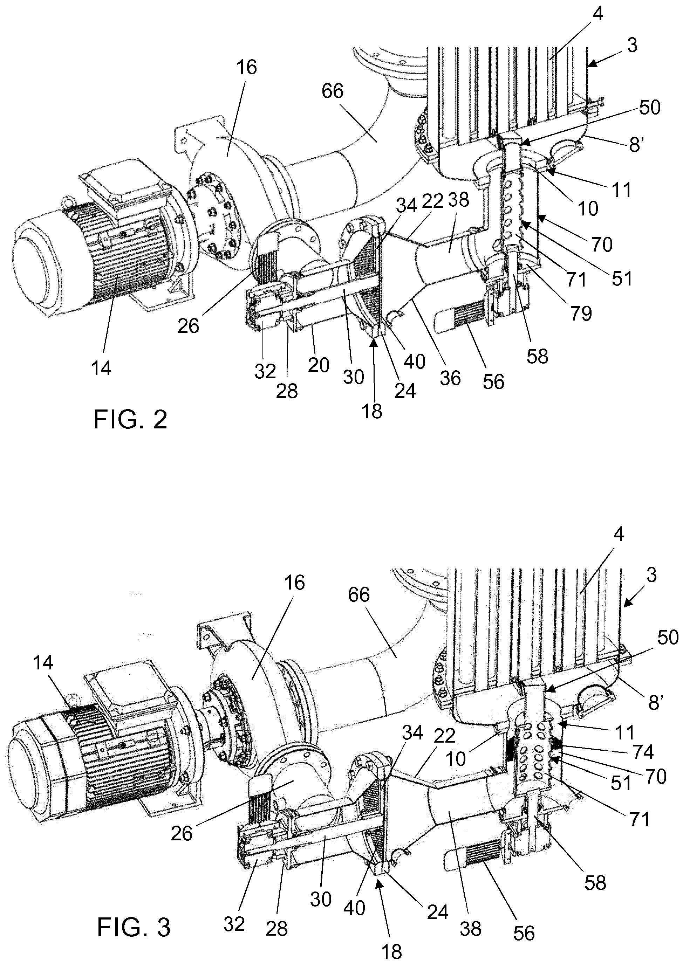

Advantageously, in the embodiment shown in Figure 3, an annular partition 74 may be provided for which is positioned coaxially/fitted around the body 71 of the rotating element 51 to divide the chamber 70 into two overlapping areas. Suitably, the annular partition 74 does not rotate with the rotating element 51.

The rotating element 51 is provided, above, with at least one nozzle 80 configured and arranged so that the jet of liquid to be filtered exiting the nozzle itself acts on the inlet openings 40 of the lower ends 41 of the filtering membranes 4.

Suitably, said at least one nozzle 80 is in fluid communication with the pipe 72 defined inside the rotating element 51 which, in turn, is in fluid communication with the chamber 70 and the circuit 5. Preferably, the pipe 72 extends above in a tubular segment 75 which ends with an arm 76, internally hollow, which extends radially with respect to the body 71. Preferably, the arm 76 has a slot 81 above, also having a radial extension, which defines said nozzle 80. In particular, the slot 81 is essentially facing, even if slightly spaced apart, the inlet openings 40 of the lower ends 41 of the filtering membranes 4.

Preferably, the first 51 and/or the second member 52 are fastened to said tubular segment 75.

Advantageously, at the bottom 79 of the chamber 70 and/or on the side wall thereof, but always at the bottom of said chamber, an opening 82 is provided for which is fluidically connected - in a controlled manner - to a circuit 83 for unloading/removing the solid residues which, once removed from the inlet openings 41 of the filtering membranes 4 by means of the action of the cleaning apparatus 50 and of the jet of product to be processed exiting the nozzle 80, fall and accumulate by gravity on a collection area provided for in said chamber 70. Advantageously, in the embodiment of Figure 2 the collection area is defined by the bottom of said chamber 70 while in the embodiment of Figure 4 the collection area is defined by the upper surface of the annular partition 74.

Suitably, it is understood that the collection area of the residues, which are removed from the inlet openings 40 of the lower ends 41 of said filtering membranes 4, may be provided for inside the chamber 70 and/or inside the tangential filter 3 and is in any case positioned below (i.e., at a level of height lower with respect to the base where the device is resting) with respect to the member 52 and/or 53 and to said nozzle 80 so that the residues removed from the inlet openings 40 of the filtering membranes 4 may fall by gravity in said area. In particular, for example, the residues collection area may also be defined on the bottom of said lower head 8", around the inlet opening 10.

In particular, the circuit for unloading/removing 83 the solid residues is provided with a valve assembly 84 which, once opened, causes - due to the pressure difference present between the chamber 70 and said circuit - the suction and the passage within the unloading circuit 83 of the solid residues present in said collection area.

The operation of the device 1 in accordance with the invention clearly derives from what has been described. In particular, the product (liquid or fluid) to be filtered, originating from the feeding circuit, enters inside the device 1 and is sent by the pump 16 towards the tangential filter 3. Preferably, before reaching the tangential filter 3, the product to be processed passes through the shredder 18, which mashes, through the perforated plate 40, the bodies in suspension, which are held by the latter and finely shredded by the action of the cutting blades 34.

Therefore, the product to be filtered (containing liquid and the shredded suspensions) then exits the shredder 18 and, through the duct 38, enters the chamber 70 and, also, enters - preferably through the holes 73 - inside the pipe 72 provided for inside the rotating element 51 which is actuated in rotation by the motorized actuator 56.

In particular, the product to be filtered which arrives from the duct 38 and enters the chamber 70 is divided into two flows: a first flow enters and passes through the internal pipe 72 and emerges from the nozzle 80, the other instead enters and passes through the annular space (defined between the inner walls of the chamber 70 and the outer walls of the body 71), then passes through the lower inlet opening 10, enters the lower portion of the filter 3 (i.e., the one defined between the lower head 8' and the lower ends 41 of the filtering membranes 4) and directly invests the inlet openings 40 of said filtering membranes 4.

Advantageously, the combined removal and scraping action carried out by the first member 52, combined with the jet of product to be filtered originating from the nozzle 80, removes the solid residues present at the inlet openings 40 of the filtering membranes 4, thus reducing the obstruction thereof and thus improving the filtration capability of the tangential filter 3. Furthermore, the residues thus removed fall by gravity into the collection area defined by the bottom 79 of the chamber 70 from where they are then removed and brought outside the filter 3 by means of the unloading circuit 83. Suitably, it is understood that - in the embodiment of Figure 3 - the solid residues removed fall by gravity on the upper surface of the annular partition 74, from where they are then removed and brought outside the filter 3 by means of the unloading circuit 82.

Advantageously, the variation of the flow speed inside the channels 43 of the filtering membranes 4, variation which is obtained by means of the action of the second member 53, allows the solid residues present along the inner walls 44 of said channels to be removed, and thus improves the filtration capability of the tangential filter 3.

Suitably, during the ascent of the product to be filtered inside the filtering membranes 4, the porous nature thereof causes the filtration of a part of the liquid crossing them and this filtered part collects in the spaces existing between the membranes 4 of the cladding 2 and from here it is then brought outside by means of the retentate outlet (not shown). In essence, the part of product which tangentially passes through the membranes 4, and which is therefore filtered, exits the tangential filter at the outlet provided for the retentate (not shown). The part of product which, instead, does not tangentially pass through the membranes 4 exits at the upper ends thereof, passes through the upper outlet opening 12 and enters the recirculation circuit 5 to be then sent to the pump 16, from which it is then re-introduced into the circulation inside the tangential filter 3.

Preferably, the device 1 in accordance with the invention is adapted and intended to be used in the food sector for the filtration of organic fluid products, such as, for example, in the wine industry for wine filtration.

From the foregoing it is clear that the device in accordance with the invention is more advantageous with respect to the conventional ones, since:
- it allows to avoid, by virtue of the continuous cleaning of the membranes, the interruptions of the filtration process, which, therefore, becomes more efficient,
- it allows to prevent the complete clogging of the membranes and therefore the difficulties related to the cleaning thereof, and
- it allows to avoid the presence of a suction pump to suck the residues which are deposited at the inlet openings of the membranes.

In particular, the present solution differs from FR2909008 since the feeding of the tangential filter occurs at the lower ends of the membranes and, furthermore, to remove the solid residues from said ends, a jet of the same product to be filtered is provided for - generated by the nozzle provided for on the rotating element - thus avoiding the need to provide for circuits for other liquids or gases. Furthermore, this is advantageous since the residues removed from the ends of the tubular membranes fall by gravity on the bottom of the chamber housing the rotating element, and/or on an annular partition present in such chamber and/or on the lower head of the tangential filter, from where they are then unloaded and/or brought outside the filter itself, without the need to integrate a circuit connected to a suction pump into the rotating element.

## Claims

1. A tangential filtration device (1), particularly for fluid food products, comprising:
- a tangential filter (3) arranged essentially vertically and provided with a plurality of filtering membranes (4) having a longitudinal extension and arranged essentially vertically, said tangential filter (3) being also provided with at least one inlet (11) for the product to be filtered, with at least one outlet (13) of the retentate and with at least one outlet of the permeate, said at least one inlet (11) for the product to be filtered being provided for at the lower portion of said tangential filter (3) so that the filtering membranes (4) are longitudinally crossed, from the bottom upwards, by the product to be processed;
- a pump (16) for sending the product to be filtered to a chamber (70) communicating with the inlet (11) of said tangential filter (3);
- a cleaning apparatus (50) comprising a rotating element (51) provided with at least one member (52, 53) integral in rotation with said rotating element (51) and acting on and/or at the inlet openings (40) of the lower ends (41) of said filtering membranes (4), said rotating element (51) being also provided with at least one nozzle (80) communicating fluidically with said chamber (70) and/or with said inlet (11) to send a jet of product to be filtered on and/or at the inlet openings (40) of the lower ends (41) of said filtering membranes (4); and
- at least one area (79, 74) for the collection of the residues which are removed from the inlet openings (40) of the lower ends (41) of said filtering membranes (4) by said cleaning apparatus (50) and/or by the jet originating from said at least one nozzle (80), said at least one collection area (79, 74) being provided inside said chamber (70) and/or inside said tangential filter (3) and being below with respect to said at least one member (52, 53) and to said nozzle (80).

2. A device according to claim 1, **characterized in that** said at least one rotating element (51) is at least partly housed inside said chamber (70).

3. A device according to one or more of previous claims, further comprising a circuit (5) for the circulation of the product to be processed (16) which connects, externally to the tangential filter (3), said inlet (11) of the tangential filter (3) to said retentate outlet (13).

4. A device according to one or more of previous claims, further comprising a shredder (18) which is arranged in the circuit segment downstream of the pump (16) and upstream of the inlet (11) of the tangential filter (3).

5. A device according to one or more of previous claims, **characterized in that** said rotating element (51) is provided, above, with a first member (52) which is configured so as to have an edge and/or a portion (54), having a radial extension, in contact with the inlet openings (40) of the lower ends (41) of the filtering membranes (4) so as to remove the residues which are deposited at and/or on said openings (40).

6. A device according to one or more of previous claims, **characterized in that** said first member (52) comprises at least partly a comb-shaped portion (55) wherein the terminations of the teeth of said comb-shaped portion are in contact with the inlet openings (40) of the lower ends (41) of the filtering membranes (4).

7. A device according to one or more of previous claims, **characterized in that** said rotating element (51) is provided, above, with a second member (53) configured so that, due to the movement in rotation thereof caused by the rotating element (51), it temporarily closes the inlet openings (40) of the lower ends (41) of one or more filtering membranes (4).

8. A device according to one or more of previous claims, **characterized in that** said second member (53) comprises at least one blade (57) essentially plane and having a radial extension which is essentially adherent to and facing at least one inlet opening (40) of the lower ends (41) of the filtering membranes (4).

9. A device according to claim 8, **characterized in that** said essentially plane blade (57) has a width (90) equal to or slightly greater than the diameter (91) of the inlet openings (40) of said filtering membranes (4) so as to temporarily close them.

10. A device according to one or more of previous claims, **characterized in that** said rotating element (51) comprises a body (71) having a vertical extension which defines and/or internally comprises a pipe (72) which is in fluid connection with said chamber (70) and with the circuit segment downstream of the pump (16).

11. A device according to claim 10, **characterized in that** said nozzle (80) provided for at the upper termination of said rotating element (51) is in fluid communication with said chamber (70) by means of said pipe (72) provided for inside of said rotating element (51).

12. A device according to one or more of previous claims, **characterized in that** said nozzle (80) comprises a slot (81) having a radial extension obtained on an arm (76), also having a radial extension, associated, above, with the body (71) of the rotating element (51).

13. A device according to one or more of previous claims, **characterized in that** said collection area is defined on the bottom (79) of said chamber (70) and/or is defined on the bottom of the lower head (8') of said tangential filter (3) and/or is defined by the surface of an annular partition (74) fitted around the body (71) of said rotating element (51).

14. A device according to one or more of previous claims, **characterized in that**, on or at said collection area (70, 74), an opening is provided for, which is connected, in a controlled manner, to a circuit (83) for unloading/removing solid residues which, once removed, fall and accumulate in said collection area (74, 79).

15. A device according to claim 14, **characterized in that** said circuit (83) for unloading/removing residues comprises a valve assembly (84) which, once opened, causes the suction and the passage of the solid residues present in said collection area (74, 79) into the unloading circuit (83).

## Patentansprüche

1. Tangentialfiltrationsapparat (1), insbesondere für flüssige Lebensmittelprodukte, umfassend:
- einen Tangentialfilter (3), der im Wesentlichen vertikal angeordnet ist und mit einer Vielzahl von Filtermembranen (4) versehen ist, die eine Längserstreckung aufweisen und im Wesentlichen vertikal angeordnet sind, wobei der Tangentialfilter (3) außerdem mit mindestens einem Einlass (11) für das zu filternde Produkt, mit mindestens einem Auslass (13) des Retentats und mit mindestens einem Auslass des Permeats versehen ist, wobei der mindestens eine Einlass (11) für das zu filternde Produkt an dem unteren Abschnitt des Tangentialfilters (3) vorgesehen ist, sodass die Filtermembranen (4) in Längsrichtung, von unten nach oben, durch das zu verarbeitende Produkt überquert werden;
- eine Pumpe (16) zum Senden des zu filternden Produkts an eine Kammer (70), die mit dem Einlass (11) des Tangentialfilters (3) verbunden ist;
- eine Reinigungseinrichtung (50), umfassend ein Drehelement (51), das mit mindestens einem Element (52, 53) versehen ist, das drehfest mit dem Drehelement (51) verbunden ist und auf die und/oder an den Einlassöffnungen (40) der unteren Enden (41) der Filtermembranen (4) wirkt, wobei das Drehelement (51) außerdem mit mindestens einer Düse (80) versehen ist, die fluidisch mit der Kammer (70) und/oder mit dem Einlass (11) verbunden ist, um einen Strahl von zu filterndem Produkt auf und/oder an die Einlassöffnungen (40) der unteren Enden (41) der Filtermembranen (4) zu senden; und
- mindestens einen Bereich (79, 74) für die Sammlung der Rückstände, die von den Einlassöffnungen (40) der unteren Enden (41) der Filtermembranen (4) durch die Reinigungseinrichtung (50) und/oder durch den von der mindestens einen Düse (80) stammenden Strahl entfernt werden, wobei der mindestens eine Sammelbereich (79, 74) innerhalb der Kammer (70) und/oder innerhalb des Tangentialfilters (3) bereitgestellt ist und sich in Bezug auf das mindestens eine Element (52, 53) und auf die Düse (80) unterhalb befindet.

2. Apparat nach Anspruch 1, **dadurch gekennzeichnet, dass** das mindestens eine Drehelement (51) mindestens teilweise innerhalb der Kammer (70) untergebracht ist.

3. Apparat nach einem oder mehreren der vorhergehenden Ansprüche, ferner umfassend einen Kreislauf (5) für die Zirkulation des zu verarbeitenden Produkts (16), der, außerhalb des Tangentialfilters (3), den Einlass (11) des Tangentialfilters (3) mit dem Retentatauslass (13) verbindet.

4. Apparat nach einem oder mehreren der vorhergehenden Ansprüche, ferner umfassend einen Zerkleinerer (18), der in dem Kreislaufsegment stromabwärts der Pumpe (16) und stromaufwärts des Einlasses (11) des Tangentialfilters (3) angeordnet ist.

5. Apparat nach einem oder mehreren der vorhergehenden Ansprüche, **dadurch gekennzeichnet, dass** das Drehelement (51) oberhalb mit einem ersten Element (52) versehen ist, das dazu ausgelegt ist, eine Kante und/oder einen Abschnitt (54) aufzuweisen, die/der eine radiale Erstreckung in Kontakt mit den Einlassöffnungen (40) der unteren Enden (41) der Filtermembranen (4) aufweist, um die Rückstände zu entfernen, die an und/oder auf den Öffnungen (40) angelagert sind.

6. Apparat nach einem oder mehreren der vorhergehenden Ansprüche, **dadurch gekennzeichnet, dass** das erste Element (52) mindestens teilweise einen kammförmigen Abschnitt (55) umfasst, wobei die Enden der Zähne des kammförmigen Abschnitts mit den Einlassöffnungen (40) der unteren Enden (41) der Filtermembranen (4) in Kontakt sind.

7. Apparat nach einem oder mehreren der vorhergehenden Ansprüche, **dadurch gekennzeichnet, dass** das Drehelement (51) oberhalb mit einem zweiten Element (53) versehen ist, das derart ausgelegt ist, dass es aufgrund der durch das Drehelement (51) verursachten Drehbewegung davon die Einlassöffnungen (40) der unteren Enden (41) von einer oder mehreren Filtermembranen (4) vorübergehend schließt.

8. Apparat nach einem oder mehreren der vorhergehenden Ansprüche, **dadurch gekennzeichnet, dass** das zweite Element (53) mindestens eine Schaufel (57) umfasst, die im Wesentlichen eben ist und eine radiale Erstreckung aufweist und im Wesentlichen an mindestens einer Einlassöffnung (40) der unteren Enden (41) der Filtermembranen (4) anliegt und einer solchen zugewandt ist.

9. Apparat nach Anspruch 8, **dadurch gekennzeichnet, dass** die im Wesentlichen ebene Schaufel (57) eine Breite (90) aufweist, die gleich oder geringfügig größer als der Durchmesser (91) der Einlassöffnungen (40) der Filtermembranen (4) ist, um diese vorübergehend zu schließen.

10. Apparat nach einem oder mehreren der vorhergehenden Ansprüche, **dadurch gekennzeichnet, dass** das Drehelement (51) einen Körper (71) umfasst, der eine vertikale Erstreckung aufweist, die eine Rohrleitung (72) definiert und/oder intern umfasst, die in Fluidverbindung mit der Kammer (70) und mit dem Kreislaufsegment stromabwärts der Pumpe (16) ist.

11. Apparat nach Anspruch 10, **dadurch gekennzeichnet, dass** die Düse (80), die an dem oberen Ende des Drehelements (51) bereitgestellt ist, mittels der Rohrleitung (72), die innerhalb des Drehelements (51) bereitgestellt ist, in Fluidverbindung mit der Kammer (70) ist.

12. Apparat nach einem oder mehreren der vorhergehenden Ansprüche, **dadurch gekennzeichnet, dass** die Düse (80) einen Schlitz (81) umfasst, der eine radiale Erstreckung aufweist, die an einem Arm (76) erhalten wird, der ebenfalls eine radiale Erstreckung aufweist, die oberhalb mit dem Körper (71) des Drehelements (51) verbunden ist.

13. Apparat nach einem oder mehreren der vorhergehenden Ansprüche, **dadurch gekennzeichnet, dass** der Sammelbereich an der Unterseite (79) der Kammer (70) definiert ist und/oder an der Unterseite des unteren Kopfes (8') des Tangentialfilters (3) definiert ist und/oder durch die Oberfläche einer ringförmigen Trennwand (74), die um den Körper (71) des Drehelements (51) angebracht ist, definiert ist.

14. Apparat nach einem oder mehreren der vorhergehenden Ansprüche, **dadurch gekennzeichnet, dass** auf oder an dem Sammelbereich (70, 74) eine Öffnung bereitgestellt ist, die, auf gesteuerte Weise, mit einem Kreislauf (83) zum Entladen/Entfernen von festen Rückständen verbunden ist, die, sobald entfernt, in den Sammelbereich (74, 79) fallen und sich dort sammeln.

15. Apparat nach Anspruch 14, **dadurch gekennzeichnet, dass** der Kreislauf (83) zum Entladen/Entfernen von Rückständen eine Ventilanordnung (84) umfasst, die, sobald geöffnet, das Ansaugen und den Durchgang der festen Rückstände, die in dem Sammelbereich (74, 79) vorhanden sind, in den Entladekreislauf (83) bewirkt.

## Revendications

1. Dispositif de filtration tangentielle (1), notamment pour produits alimentaires fluides, comprenant:
- un filtre tangentiel (3) disposé essentiellement verticalement et pourvu d'une pluralité de membranes filtrantes (4) ayant une extension longitudinale et disposé essentiellement verticalement, ledit filtre tangentiel (3) étant également pourvu d'au moins une entrée (11) pour le produit à filtrer, avec au moins une sortie (13) du rétentat et avec au moins une sortie du perméat, ladite au moins une entrée (11) pour le produit à filtrer étant prévue à la partie inférieure dudit filtre tangentiel (3) de sorte que les membranes filtrantes (4) sont traversées longitudinalement, de bas en haut, par le produit à traiter;
- une pompe (16) pour envoyer le produit à filtrer vers une chambre (70) communiquant avec l'entrée (11) dudit filtre tangentiel (3);
- un appareil de nettoyage (50) comprenant un élément rotatif (51) pourvu d'au moins un élément (52, 53) solidaire en rotation avec ledit élément rotatif (51) et agissant sur et/ou au niveau des ouvertures d'entrée (40) des extrémités inférieures (41) desdites membranes filtrantes (4), ledit élément rotatif (51) étant également pourvu d'au moins une canule (80) communiquant fluidiquement avec ladite chambre (70) et/ou ladite entrée (11) pour envoyer un jet de produit à filtrer sur et/ou au niveau des ouvertures d'entrée (40) des extrémités inférieures (41) desdites membranes filtrantes (4); et
- au moins une zone (79, 74) pour la collecte des résidus qui sont éliminés des ouvertures d'entrée (40) des extrémités inférieures (41) desdites membranes filtrantes (4) par ledit appareil de nettoyage (50) et/ou par le jet provenant de ladite au moins une canule (80), ladite au moins une zone de collecte (79, 74) étant prévue à l'intérieur de ladite chambre (70) et/ou dudit filtre tangentiel (3) qui est en dessous par rapport à ladite au moins un élément (52, 53) et à ladite canule (80).

2. Dispositif selon la revendication 1, **caractérisé en ce que** ledit au moins un élément rotatif (51) est au moins partiellement logé à l'intérieur de ladite chambre (70).

3. Dispositif selon une ou plusieurs des revendications précédentes, comprenant en outre un circuit (5) de circulation du produit à traiter (16) qui relie, extérieurement au filtre tangentiel (3), ladite entrée (11) du filtre tangentiel (3) à ladite sortie (13) du rétentat.

4. Dispositif selon une ou plusieurs des revendications précédentes, comprenant en outre un broyeur (18) qui est disposé dans le segment de circuit en aval de la pompe (16) et en amont de l'entrée (11) du filtre tangentiel (3).

5. Dispositif selon une ou plusieurs des revendications précédentes, **caractérisé en ce que** ledit élément rotatif (51) est pourvu, au dessus, d'un premier élément (52) qui est configuré pour avoir un bord et/ou une portion (54), ayant une extension radiale, en contact avec les ouvertures d'entrée (40) des extrémités inférieures (41) des membranes filtrantes (4) de manière à éliminer les résidus qui se déposent au niveau et/ou sur lesdites ouvertures (40).

6. Dispositif selon une ou plusieurs des revendications précédentes, **caractérisé en ce que** ledit premier élément (52) comprend au moins en partie une portion en forme de peigne (55) dans laquelle les terminaisons des dents de ladite portion en forme de peigne sont en contact avec les ouvertures d'entrée (40) des extrémités inférieures (41) des membranes filtrantes (4).

7. Dispositif selon une ou plusieurs des revendications précédentes, **caractérisé en ce que** ledit élément rotatif (51) est pourvu, au-dessus, d'un deuxième élément (53) configuré de telle sorte qu'en raison du mouvement de rotation de celui-ci provoqué par l'élément rotatif (51), il ferme temporairement les ouvertures d'entrée (40) des extrémités inférieures (41) d'une ou plusieurs membranes filtrantes (4).

8. Dispositif selon une ou plusieurs des revendications précédentes, **caractérisé en ce que** ledit deuxième élément (53) comprend au moins une lame (57) essentiellement plane et ayant une extension radiale qui adhère essentiellement à et fait face à au moins une ouverture d'entrée (40) de la extrémités inférieures (41) des membranes filtrantes (4).

9. Dispositif selon la revendication 8, **caractérisé en ce que** ladite lame essentiellement plane (57) a une largeur (90) égale ou légèrement supérieure au diamètre (91) des ouvertures d'entrée (40) dudit filtrage membranes (4) de façon à les fermer temporairement.

10. Dispositif selon une ou plusieurs des revendications précédentes, **caractérisé en ce que** ledit élément rotatif (51) comprend un corps (71) ayant une extension verticale qui définit et/ou comprend intérieurement un tuyau (72) qui est en communication fluidique avec ladite chambre (70) et avec le segment de circuit en aval de la pompe (16).

11. Dispositif selon la revendication 10, **caractérisé en ce que** ladite canule (80) prévue à l'extrémité supérieure dudit élément rotatif (51) est en communication fluidique avec ladite chambre (70) au moyen dudit tuyau (72) prévu à l'intérieur dudit élément rotatif (51).

12. Dispositif selon une ou plusieurs des revendications précédentes, **caractérisé en ce que** ladite canule (80) comprend une fente (81) ayant une extension radiale obtenue sur un bras (76), ayant également une extension radiale, associée, ci-dessus, au corps (71) de l'élément rotatif (51).

13. Dispositif selon une ou plusieurs des revendications précédentes, **caractérisé en ce que** ladite zone de collecte est définie sur le fond (79) de ladite chambre (70) et/ou est définie sur le fond de la tête inférieure (8') dudit filtre tangentiel (3) et/ou est défini par la surface d'une cloison annulaire (74) ajustée autour du corps (71) dudit élément rotatif (51).

14. Dispositif selon une ou plusieurs des revendications précédentes, **caractérisé en ce que**, sur ou au niveau de ladite zone de collecte (70, 74), est prévue une ouverture, qui est reliée, de manière contrôlée, à un circuit (83) pour décharger/éliminer les résidus solides qui, une fois enlevés, tombent et s'accumulent dans ladite zone de collecte (74, 79).

15. Dispositif selon la revendication 14, **caractérisé en ce que** ledit circuit (83) de déchargement/évacuation des résidus comprend un ensemble valve (84) qui, une fois ouvert, provoque l'aspiration et le passage des résidus solides présents dans ladite zone de collecte (74, 79) dans le circuit de déchargement (83).
